# FASCICULE DE BREVET EUROPEEN

(11) **EP 0 349 371 B1**
(45) Date de publication et mention de la délivrance du brevet: **10.08.1994**
(21) Numéro de dépôt: 89401679.9
(22) Date de dépôt: 15.06.1989
(51) Int. Cl.: G06F 13/38

(54) **Système informatique à interconnexion centrale**
Rechneranlage mit einer zentralen Zwischenverbindung
Computer system having a central interconnection

(30) Priorité: 27.06.1988 FR 8808578
(43) Date de publication de la demande: 03.01.1990
(73) Titulaire: BULL S.A., 92800 Puteaux (FR)
(72) Inventeur: Hubert, Maurice, F-75016 Paris (FR)
(74) Mandataire: Colombe, Michel

(56) Documents cités:
- EP-A- 0 133 117
- EP-A- 0 193 933
- COMPUTER DESIGN, vol. 22, no. 11, octobre 1983, pages 117-123, Winchester,Massachusetts, US; R.R. RUSS: "Getting the best of both buses"
- IEEE TRANSACTIONS ON NUCLEAR SCIENCE, vol. NS-30, no. 5, octobre 1983, pages3958-3963, IEEE, New York, US; R.K. ADAIR et al.: "Brookhaven fastbus/unibusinterface"
- ELECTRO AND MINI/MICRO NORTHEAST, New York, 23-25 avril 1985, pages 1-9,Electronic Conventions Management; S.D. COOPER: "Multibus II-A majoradvancement in multiprocessing"

## Description

La présente invention a pour objet un système informatique à interconnexion entre ses organes centraux et ses organes périphériques.

Les systèmes informatiques courants sont constitués d'organes centraux, processeurs ou unités centrales (CPUs) et une mémoire centrale comportant une ou plusieurs unités de mémoire (MMUs), d'un ou plusieurs contrôleurs d'Entrée/Sortie permettant de communiquer avec des organes périphériques par exemple (mémoires à disque, modems, imprimantes ...). Les processeurs (CPUs) et les unités de la mémoire centrale (MMUs) communiquent par un bus interne de communication dont le protocole est choisi par le concepteur du système-hôte en fonction de l'architecture de celui-ci. Ces protocoles sont le plus souvent spécifiques et très divers. Par contre on observe chez les industriels l'apparition de bus standards, tels les bus de "Fond de Panier" de norme IEEE. Le plus souvent ces bus standards présentent au moins une voie de communication parallèle.

Le problème d'interconnexion entre deux bus ayant des protocoles différents est traité dans la revue COMPUTER DESIGN, vol. 22, n° 11, octobre 1983, pages 117 à 123 dans un article intitulé "Getting the best of both buses". Selon cet article, une interface UNI/VERS est disposée entre les deux bus et est constituée de deux cartes U-board et V-board connectées respectivement aux deux bus Unibus et Versabus et reliées électriquement entre elles. Bien que cette solution permette de constituer un système unique à partir de deux systèmes ayant des bus de protocoles différents, elle présente l'inconvénient d'être spécifique des deux bus choisis. En particulier, chaque carte associée à un bus n'est pas prévue pour permettre la liaison entre ce bus et un autre bus de protocole quelconque.

Il est d'autre part connu notamment du document EP-A-193 933 de faire communiquer plusieurs systèmes informatiques par l'intermédiaire de liaisons de communication. Cependant, ces liaisons permettent seulement l'appel de programmes d'un système par un autre système et ne constituent donc pas des moyens pour former un système unique où une unité reliée à un bus quelconque du système peut s'adresser directement à une autre unité reliée à un autre bus du même système.

Une autre possibilité pour faire communiquer entre eux plusieurs ordinateurs et terminaux de protocoles différents est décrite dans le document EP-A-0133117. Elle consiste à réaliser un réseau local utilisant par exemple un câble "Ethernet" sur lequel les unités sont branchées par l'intermédiaire d'unités d'interface de réseau. Les unités d'interface des ordinateurs intègrent les fonctions de contrôle de réseau et d'accès direct à la mémoire (DMA) de façon à réduire le volume de traitement des ordinateurs et ainsi autoriser un plus grand nombre de terminaux. Cette structure permet de réaliser les fonctions habituelles des systèmes informatiques constitués d'un système-hôte reliés à un ensemble de terminaux.

L'invention a pour but d'améliorer les possibilités de communication entre toutes les unités du système aussi bien celles du système-hôte que celles qui constituent les organes périphériques de sorte que ces organes périphériques puissent être choisis d'un type quelconque, tel que mémoire de masse ou terminal ainsi que co-processeur ou mémoire centrale auxiliaire. Les communications entre les unités sont réalisées au moyen de liaisons entre des bus de protocoles quelconques pour pouvoir utiliser au mieux les bus standards et ainsi augmenter la flexibilité et diminuer les coûts.

A cette fin, l'invention propose un système informatique comportant au moins une unité centrale et une mémoire centrale communiquant par l'intermédiaire d'un bus interne de communication, une pluralité de bus externes de communication de types différents de celui du bus interne et reliés chacun à au moins un module de contrôle, ci-après appelé module IOM, et associé à au moins un organe périphérique, ledit bus interne étant relié à un agent de liaison interne, lesdits bus externes étant reliés chacun à un agent de liaison externe, chacun desdits agents de liaison externes étant reliés audit agent de liaison interne par une liaison inter-agent, ci-après appelée liaison PLI, ladite liaison PLI possédant son propre protocole de communication et lesdits agents de liaison assurant l'adaptation entre les protocoles utilisés respectivement dans les bus et la liaison PLI, ledit système étant caractérisé en ce que lesdits agents de liaison externes sont reliés par un réseau étoilé de liaisons PLI audit agent de liaison interne qui est muni de moyens de connexion pour assurer la retransmission des messages émis par l'un quelconque des modules IOM et destinés à un autre module IOM associé à un bus externe différent.

Il est ainsi possible, sans surcharger le bus interne ni modifier la capacité des modules IOM, d'interconnecter un très grand nombre d'agents périphériques.

Selon une caractéristique préférée de l'invention permettant la plus grande souplesse d'utilisation de l'interconnexion centrale, les protocoles utilisés respectivement dans les bus et la liaison PLI sont différents.

L'invention présente également un certain nombre de variantes dont les caractéristiques particulières contribuent à améliorer l'efficacité de l'interconnexion.

Selon une première variante de l'invention, la liaison PLI est de type présentant une voie de communication parallèle travaillant en mode message de type paquet (transmission de message avec en-tête).

Avantageusement dans cette variante de l'invention, la voie de communication parallèle de la liaison PLI est bidirectionnelle et comporte une ligne de synchronisation entre les agents de liaison interne et externes.

Selon une autre variante de l'invention, le signal de synchronisation XCL dans la liaison PLI est généré par une horloge émettant à partir de l'agent de liaison interne et commandant deux séquenceurs disposés dans chacun des agents de liaison.

Selon une autre variante de l'invention, la liaison PLI comporte une voie série indépendante et commandée par deux contrôleurs de service disposés dans chacun des agents de liaison et destinés à transmettre les ordres d'initialisation et/ou de service-maintenance. Cette transmission peut ainsi être effectuée en toute indépendance de la voie parallèle sans contrainte ni blocage d'aucune sorte.

Enfin, selon encore une autre variante de l'invention, l'agent de liaison externe comporte en outre des moyens de communication indirecte entre les modules IOM et les unités mémoire pour assurer une fonction "Serveur-Mémoire" lors de flots de données en réponse à des messages de négociation issus du module IOM. Cette caractéristique contribue sensiblement à améliorer la communication entre agent et mémoire centrale notamment au niveau du débit efficace du sous-système périphérique et de la réduction du temps d'occupation des modules IOM de ce sous-système.

Sans sortir du cadre de l'invention, les diverses variantes peuvent être combinées les unes aux autres pour en tirer le meilleur parti possible selon le système informatique recherché.

Un mode de réalisation de l'invention est maintenant décrit à titre d'exemple non limitatif en se référant aux dessins ci-annexés dans lesquels :
- la Figure 1 représente un schéma général d'un système informatique selon l'invention ;
- la Figure 2 représente les modèles de communication structurés en couches entre les organes centraux (mémoires centrales (MMUs) et processeurs (CPUs)) sur le bus interne et les organes périphériques (modules IOM) sur les bus externes;
- La Figure 3 représente les formats des divers messages véhiculés sur les bus interne et externe et la liaison inter-agent au cours d'une communication du type liaison directe entre un module IOM et la mémoire centrale (MMU);
- la Figure 4 représente le schéma de principe de l'agent de liaison interne (CLM) illustré à la Figure 1;
- la Figure 5 représente un organigramme d'un réseau logique programmé incorporé dans l'agent de liaison interne (CLM) illustré à la Figure 4;
- la Figure 6 représente le schéma de principe de l'agent de liaison externe (PLM) illustré à la Figure 1;
- et la Figure 7 est une représentation schématique de la liaison inter-agent PLI illustrée à la Figure 1.

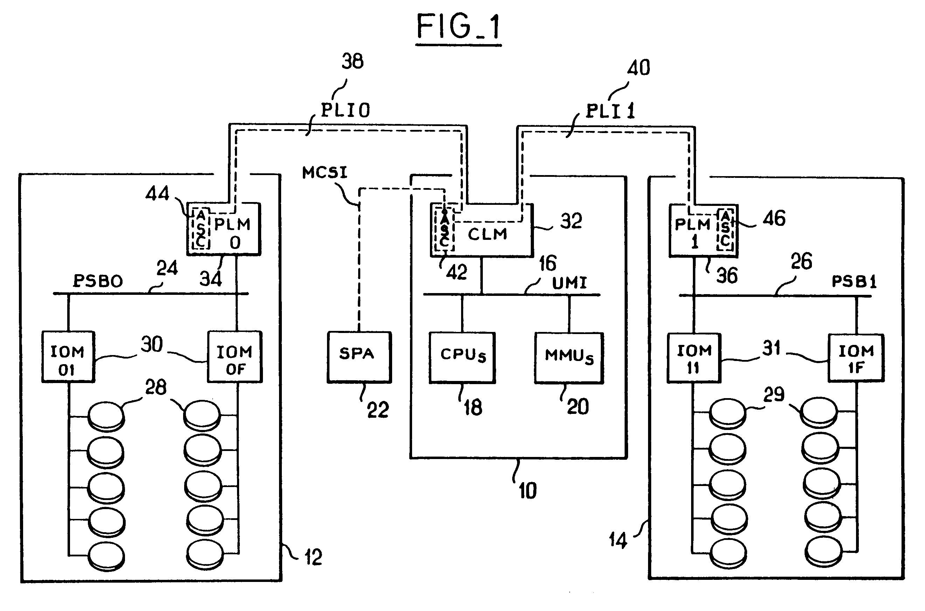

Le système informatique illustré à la Figure 1 est représenté schématiquement sous la forme de trois sous-ensembles physiques localisés, un sous-ensemble central 10 et deux sous-ensembles périphériques 12 et 14. Le sous-ensemble central 10 reçoit les organes centraux du système groupés autour d'un bus de communication interne 16 ci-après appelé bus UMI plus particulièrement une ou plusieurs processeurs centraux (CPUs) 18 et une ou plusieurs unités de mémoire centrale (MMUs) 20. Dans le mode de réalisation de l'invention ici décrit, les organes centraux du système informatique appartiennent à une architecture machine de la société demanderesse. Selon cette architecture le bus de communication UMI est structuré selon trois voies séparées : une voie de commande (UMI-CMD), une voie d'adresse (UMI-AD) et une voie de données (UMI-DT) parallèle de 32 bits de largeur utile. La fréquence de son horloge est de 7,5 MHZ lui assurant un débit maximum de 30 M octets/s.

Les sous-ensembles 12 et 14, au nombre non limitatif de deux sont structurés autour de bus de communication externes (24,26) de même type ou de type différent. Dans le mode de réalisation ici décrit, les bus externes sont constitués par une voie de communication parallèle standard intitulée PSB. Ce standard de l'industrie est aujourd'hui bien connu et a fait l'objet d'une description sous l'appellation de Norme IEEE 1296, publication à laquelle le lecteur pourra se reporter si nécessaire. En ce qui concerne le standard PSB, sa fréquence d'horloge est de 10 MHz et son débit peut atteindre 32 Moctets/s en mode message avec des paquets de données de 32 octets et près de 40 Moctets/s avec des paquets de données de 256 octets. A chaque bus PSB, ici au nombre de deux et intitulés PSB 0 (réf 24) et PSB 1 (réf 26), sont associés des organes périphériques 28, 29 du système informatique. Ces organes 28, 29 d'un type quelconque (unités de traitement auxiliaires par exemple co-processeurs, mémoires centrales auxiliaires, mémoires de masses) sont reliés au PSB correspondant au travers de modules de contrôle 30,31 ci-après appelés modules IOM.

Le bus de communication interne UMI et chaque bus externe PSB sont reliés par une interconnexion composée d'un agent de liaison interne (CLM) 32 connecté au bus UMI, un agent de liaison externe (PLM) 34,36 connecté au bus PSB et une liaison inter-agent ci-après appelés liaison PLI, 38, 40. Comme il le sera expliqué plus en détail ultérieurement, chaque liaison comporte une voie parallèle PC-PLI (représentée en trait plein) et une voie série SC-PLI (représentée en ligne de tiretée) commandées à chaque extrémité par des contrôleurs de service, ci-après appelés contrôleurs (ASC) 42, 44 et 46 incorporés respectivement dans l'agent de liaison interne (CLM) et les deux agents de liaison externes (PLM). Cette voie série destinée à transmettre les ordres d'initialisation et de service-maintenance à l'ensemble des agents connectés aux bus externes PSB, est reliée au contrôleur de service (ASC) 42 de l'agent (CLM) dont la sortie MCSI est reliée au processeur de service du système (non représenté). Du point de vue construction, la voie parallèle de PLI, large de 4 octets peut avoir une longueur maximum de 2,5 mètres avec une fréquence d'horloge de 16 MHz et une fréquence maximum d'horloge de 25 MHz avec une longueur de 0,5 mètres. A la fréquence de 16 MHz son débit utile (relatif aux données) peut atteindre 42 Moctets/s avec des blocs de 16 octets, 50 Moctets/s avec des blocs de 32 octets, 56 Moctets/s avec des blocs de 64 octets et près de 64 Moctets/s avec des blocs de 256 octets. A la fréquence de 25 MHz, les débits sont respectivement de 66, 80, 88 et près de 100 Moctets/s. Son protocole est du type mode message par paquet. La voie série de PLI travaille en duplex, à environ 15.000 bauds en mode asynchrone sur caractères de 8 bits plus parité.

Dans le mode de réalisation de l'invention ici décrit, le nombre de bus PSB du sytème est égal à deux. Il est à noter qu'il n'y a pas de limitation du nombre de bus externes PSB et de liaisons PLI correspondantes au regard de l'invention. Les véritables limitations se situent au niveau de la capacité physique de certains composants du système, par exemple de l'agent de liaison interne (CLM) et/ou au niveau de l'adressage pour l'identification des unités du système. A titre d'exemple purement indicatif, le nombre d'organes centraux (CPUs) et (MMUs) associés au bus interne peut être de 30, tandis que le nombre de bus périphériques PSB peut aller jusqu'à 12 et que chacun des bus PSB peut recevoir jusqu'à 15 modules IOM.

Le système ici décrit présente une structure étoilée de deux liaisons PLI autour d'un unique agent de liaison (CLM) 32 capable d'assurer la communication directe entre tous les agents périphériques quelque soit les bus PSB auxquels ils sont associés. Cette caractéristique très avantageuse au niveau de la facilité d'utilisation du système sera décrite plus en détail ultérieurement. Dans cette configuration, les liaisons PLI et les agents de liaison externes (PLM) sont respectivement identiques entre eux.

Dans la suite de la description et sauf mention contraire, il sera fait référence indistinctement à un seul sous-ensemble périphérique, un seul bus PSB, un seul agent de liaison externe (PLM) et une seule liaison PLI.

Dans le cadre de l'invention, les bus PSB travaillent en mode message comme leur liaison PLI et permettent d'implanter vis à vis des organes centraux du système la fonction canal E/S dans les modules IOM ; chacun de ceux-ci pouvant supporter un ou plusieurs canaux E/S physiques.

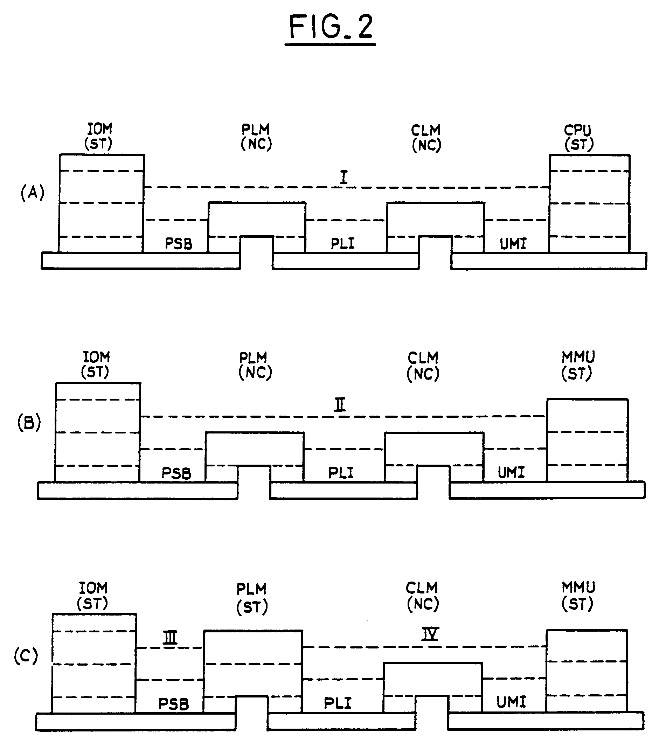

Dans le système informatique selon l'invention, les fonctions réalisées par l'interconnexion centrale (agents de liaison (CLM) et (PLM) et liaison PLI) sont essentiellement les fonctions de communication d'évènements, de commandes et de données, réalisant ainsi un réseau de communication entre les modules IOM de PSB et les organes centraux du système. Si cette interconnexion permet la réalisation de la fonction canal E/S sur les PSB, cette dernière est véritablement assurée par les modules IOM. Toutefois pour faciliter l'implémentation de la fonction canal E/S dans les modules IOM, l'agent (PLM) apporte une aide concernant les mouvements de données avec la mémoire centrale (MMU) en assurant une fonction de communication de type "Serveur Mémoire". Plus précisément en se référant à la Figure 2, le modèle des communications assurées "unité" à "unité" entre stations actives, organes centraux (CPU) et (MMU), modules IOM et agents (PLM) en mode "Serveur Mémoire", se répartit comme suit :
type I : liaisons IOM/CPU (interruptions = Modèle (A))
type II : liaisons IOM/MMU (accès mémoire immédiat = Modèle (B))
type III : liaisons IOM/PLM (mouvements de données - phase externe = Modèle (C))
type IV : liaisons PLM/MMU (mouvements de données - phase interne = Modèle (C))
Les modèles de communication structurés en couches (normes OSI) et illustrés à la Figure 2, montrent que l'agent (CLM) se comporte toujours comme un noeud de communication NC (comportement passif) et que l'agent (PLM) se comporte soit comme un noeud de communication NC pour les liaisons de types I et II (messages directs), soit comme une station ST (comportement actif) pour les liaisons de types III et IV (messages indirects) lorsqu'il est utilisé comme "Serveur Mémoire" par les modules IOM.

D'une façon générale, tous les messages sont non-sollicités (de type asynchrone) à la seule exception formée par certains messages véhiculés sur le bus PSB et concernant les "Paquets de Données". Ces messages dits synchrones qui sont sollicités par des messages asynchrones apparaissent dans les liaisons de type III (IOM/PLM). La cadence d'arrivée des messages synchrones est négociée entre l'agent de liaison (PLM) et le module IOM.

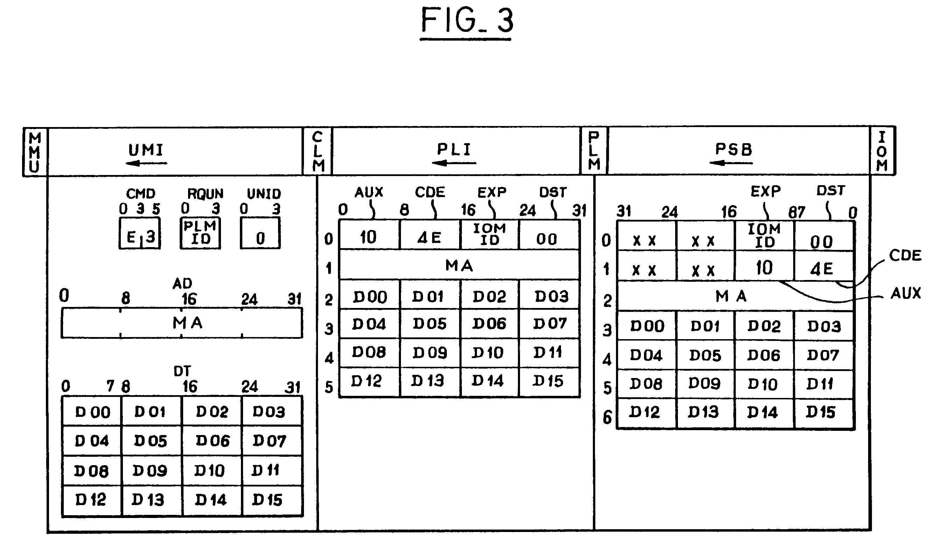

A titre d'exemple, la Figure 3 illustre les formats des divers messages véhiculés par les bus UMI, PLI (voie parallèle), et PSB dans le cas d'une liaison de type II (IOM/MMU) plus exactement l'écriture en mémoire centrale à l'adresse MA d'un bloc de données DOO-D15.

Si on considère le format des informations véhiculées par le bus UMI, on remarque la voie de commande, composée des lignes CMD,RQUN et UNID, la voie d'adresse UMI-AD donnant l'adresse réelle MA en mémoire centrale sur 32 bits (0-31), et la voie de données UMI-DT susceptible de transmettre des blocs de 16 octets. La voie de commande se décompose en un champ de commande proprement dit "CMD" large de 6 bits (0-3, 4-5) portant la référence du code opération, ici "E3", un champ d'identification de l'unité expéditeur "RQUN" large de 4 bits, portant la référence d'identification de l'agent (PLM) auquel est associé le module IOM source du bloc de données DOO-D15 et une ligne d'identification de l'unité destinataire "UNID" large de 4 bits ici portant la valeur "0" significative d'un accès direct vers les organes centraux du système et complétée par l'existence d'une adresse réelle MA dans la voie d'adresse UMI-AD.

Les formats des messages dans la liaison PLI et le bus PSB sont apparentés et se présentent sous une forme divisible en mots de 4 octets (0-31) avec une partie "en-tête" et une partie "données". La partie "en-tête" des messages de la liaison PLI et du bus PSB comporte quatre premiers octets significatifs rassemblés sur un mot (4 octets) dans la liaison PLI et sur deux mots dans le bus PSB pour se conformer dans ce dernier cas à la Norme IEEE 1296 : les octets n^{o}1 (DST) et n^{o}2 (EXP) sont réservés à l'identification des agents ou organes destinataire et expéditeur (IOM-ID,PLM-ID,CPU-ID), les octets n^{o}3 (CDE) et n^{o}4 (AUX) sont réservés à la codification des commandes principale et auxiliaire également appelés codes "opération". La partie "données" des messages suit l'en-tête à commencer quand elle existe par une adresse mémoire MA sur 32 bits.

Dans l'exemple illustré à la figure 3, le champ DST contient la valeur 00-Hex (notation hexadécimale) significative d'un accès direct vers les organes centraux du système, le champ EXP contient l'identificateur du module IOM (IOM-ID) expéditeur, le champ CDE contient la valeur correspondante à l'opération d'écriture 4E-Hex et le code AUX contient la valeur 10-Hex (qui correspond à la longueur du champ d'octets significatif du bloc à écrire soit 16 octets dans le cas présent d'une écriture totale d'un bloc). D'une façon générale le champ AUX peut être utilisé à partir de diverses informations telles que des références d'opération données par les agents par exemple : IOM ref. ou PLM ref.

Il est à noter que les valeurs de remplissage des champs des "en-tête" des messages sur PLI et PSB correspondent aux mêmes spécifications des codes "opération" et codes "identification" par souci de commodité et d'efficacité. Dans le cas où les messages PLI et PSB concernent des liaisons directes entre organes centraux et modules IOM, les références aux champs DST,EXP,CDE et AUX correspondent indistinctement aux messages sur la liaison PLI et le bus PSB.

Pour la suite de la description et sauf indication particulière, les références aux champs DST,EXP,CDE et AUX auront trait aux parties "en-tête" des messages sur la liaison PLI et le bus PSB.

Il est à remarquer que l'invention est décrite en se référant à un type de bus interne très spécifique, le bus UMI. Il est bien entendu que sans sortir du cadre de l'invention les blocs de données ici limités à 16 octets peuvent être élargis jusqu'à 256 octets sans avoir à changer le format des messages de la liaison PLI, notamment au niveau de la longueur du champ des octets significatifs d'un bloc de donnée (maximum 256 octets donné par la valeur hexadécimale 00-Hex dans l'octet correspondant au code complémentaire AUX de la partie "en-tête").

Les différents messages correspondants aux quatre types de liaisons vont maintenant être présentés succintement. Par rapport aux messages décrits avec l'exemple illustré Figure 3, les messages correspondants évolueront pour tenir compte de la spécificité de la liaison (par exemple : certains messages PLI n'auront qu'un mot, d'autres ne présenteront pas d'adresse mémoire MA). Cependant tous les messages se présenteront selon la même structure de base précédemment décrite, notamment au niveau de la partie "en-tête".

### I.Liaisons IOM/CPU

Les canaux E/S implémentés sur les modules IOM, coté bus PSB, et l'unité centrale (CPU), coté bus UMI, communiquent directement et dans les deux sens par des messages de type "interruption" pour notification d'évènements tels que : connexion, déconnexion, fin etc ... Les informations transitent sur les trois liaisons physiques que sont les deux bus UMI et PSB, et la liaison PLI.

Pour ce type de messages, les agents de liaison (CLM) et (PLM) sont transparents, leurs roles se limitant à la transposition des protocoles notamment à la restructuration de la partie "en-tête" des messages.

Sur la liaison PLI, les messages se limitent à un mot. Dans le cas d'une interruption de l'unité centrale par un module IOM, les champs sont codés de la façon suivante : 00-Hex pour DST, IOM-ID pour EXP, le code opération 48-Hex pour CDE et CPU-ID pour AUX. Dans le cas d'une interruption inverse, le champ AUX porte un code de pointage PC dans une table d'Entrée/Sortie prévue dans la mémoire centrale (MMU). En effet, les informations complémentaires relatives à l'évènement ainsi notifié sont obtenues par le module IOM sollicité par une procédure dite de "boîtes aux lettres".

### II.Liaisons IOM/MMU

Les liaisons IOM/MMU entre modules IOM et mémoire centrale (MMU) sont aussi appelées opération d'accès mémoire immédiat. Selon l'invention, les commandes d'accès mémoire élémentaire (lecture, écriture) sont réalisées sous la forme de messages. Ainsi donc, les informations transitent sur les trois liaisons physiques UMI, PLI et PSB sous la forme de messages ou requêtes non sollicités (asynchrones). Dans ce cas, les agents de liaison (CLM) et (PLM) sont également transparents avec pour seule fonction la transposition des protocoles.

Les messages ou requêtes vers la mémoire centrale (champ DST=00) sont susceptibles de délivrer les informations suivantes :
a. Commande : "Test/Set Bloc" (champ CDE=45) ou "Lire Bloc" (champ CDE=46) ou "Ecrire Bloc" (champ CDE=4E) (total ou partiel).
b. Adresse mémoire (MA) : Adresse d'octet indiquant le début de la zone mémoire considérée.
c. Longueur du champ d'octets significatifs dans le bloc à écrire (AUX).
d. Données à écrire (par bloc de 16 octets).

Dans le cas d'une écriture réussie, la mémoire centrale n'envoit pas de message en réponse aux commandes d'écriture. Par contre, dans le cas contraire, le message réponse renvoit l'adresse mémoire de la commande "Ecrire Bloc" et précise les causes de la défaillance.

Dans le cas d'une opération de lecture (y compris "Test/Set Bloc"), le message de réponse de la mémoire centrale au module IOM décline le contenu du bloc accédé en mémoire centrale, en notifiant éventuellement les erreurs corrigées ou indique la cause de la défaillance.

La commande "Ecrire Bloc" (qui a servi d'exemple à la présentation des messages illustrés à la Figure 2) est envoyée par le module IOM vers la mémoire centrale (MMU) avec une identification DST à 00-Hex. Elle est accompagnée de l'adresse mémoire MA et du bloc de données à écrire, partiellement ou en totalité.Le premier octet significatif est donné par le contenu des bits de poids faibles 28-31 de l'adresse MA, la longueur des octets significatif étant contenue dans le champ AUX (valeur inférieure à 10-Hex dans le cas d'écriture partielle de bloc).

La commande "Lire Bloc" est également envoyée vers la mémoire centrale (MMU) avec une identification DST à 00-Hex. Elle est accompagnée de l'adresse mémoire MA et d'une référence de la demande IOM (IOM ref.) portée dans le champ AUX. Les commandes des réponses de la mémoire centrale sont au nombre de quatre :
- Erreur Ecriture Mémoire (champ CDE = 49) : cette commande renvoit au module IOM l'adresse mémoire MA attachée à la commande "Ecrire Bloc" non exécutée avec une indication du type de la défaillance au champ AUX.
- Retour Bloc Mémoire - Etat 0 (champ CDE = 40) : cette commande en réponse à une commande "Lire Bloc" délivre le contenu du bloc mémoire demandé et indique l'absence d'erreur de lecture.
- Retour Bloc Mémoire - Etat 1 (champ CDE = 41) : cette commande en réponse à une commande "Lire Bloc" délivre le contenu du bloc mémoire demandé et indique une correction d'erreurs de lecture.
- Retour Bloc Mémoire - Etat 2 (champs CDE = 42) : cette commande en réponse à une commande "Lire Bloc" délivre le contenu du bloc mémoire demandé et indique l'existence d'erreurs non corrigibles.

Ces messages de réponse ont tous pour code DST l'identification du module IOM à l'origine de la requête (IOM-ID).

### III. Liaisons IOM/PLM

Ces liaisons IOM/PLM constituent la phase externe des opérations globales de mouvements de données en entrée ou en sortie de la mémoire centrale (MMU) dans lesquelles la communication IOM/MMU n'est plus directe mais contrôlée par l'agent (PLM) qui joue le rôle de "Serveur Mémoire".

A ces liaisons IOM/PLM ne correspondent exclusivement que des messages sur le bus PSB.

Ces opérations externes initialisées par des messages de négociation issus des modules IOM sont placées sous le contrôle de l'agent (PLM). L'agent (PLM) comporte un ensemble de 32 serveurs à fonction DMA (accès direct mémoire). Chaque serveur étant composé de 11 registres :
. un registre "Référence de l'opération IOM" de 16 bits,
. un registre "Commande Mémoire" de 8 bits,
. un registre "Longueur Transfert" de 16 bits (longueur par mot de 4 octets),
. quatre descripteurs mémoire pour le chainage des tampons en mémoire centrale et compremant chacun un registre "Longueur" de 16 bits soit un demi-mot (longueur à l'octet) et un registre "Adresse" de 32 bits soit un mot (adresse à l'octet).

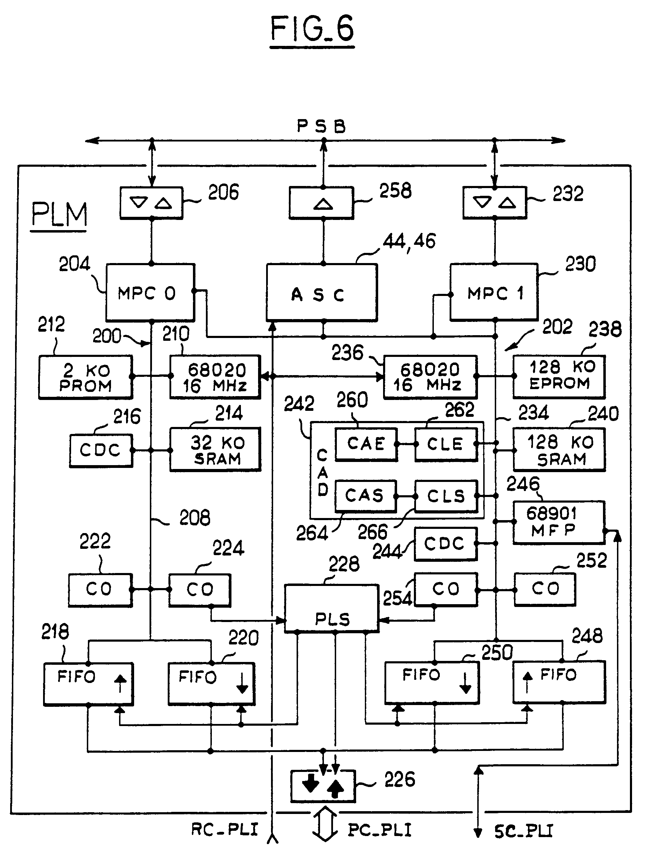

Un module IOM peut occuper autant de serveurs à fonction DMA qu'il peut en demander dans la limite de leur disponibilité. Il est à noter que la capacité pour les serveurs DMA d'opérer de façon simultanée dépend essentiellement des circuits de contrôle du bus PSB et de la structure de l'agent (PLM). A titre d'exemple l'agent (PLM) décrit ultérieurement en référence à la Figure 6 ne permet simultanément qu'une opération d'entrée et une opération de sortie. Ces opérations externes de mouvements de données portent sur des longueurs qui peuvent atteindre 4 fois 64 Koctets. Les serveurs à fonction DMA sont des "Serveurs Mémoire" qui déchargent les modules IOM et le bus PSB, augmentant ainsi le débit efficace (ou utile) du bus PSB.

Dans le cas d'une entrée de données en mémoire centrale, le module IOM initialise l'opération par l'envoi sur PSB d'un message asynchrone "Requête Tampon-Entrée" (champ CDE=24) comportant une partie "en-tête" de deux mots incorporant en outre l'identification de l'agent PLM recherché (PLM-ID) dans le champ DST, la référence de l'opération IOM (IOM ref.) dans le champ AUX et une partie "données" incorporant la longueur totale (mot n^{o}2) en multiple de 4 octets (arrondie au multiple supérieur) du transfert de données obtenue par la somme des longueurs données dans les descripteurs mémoire joints et les descripteurs (mots n^{o}3 à 8) comportant chacun la longueur en octets de la chaine d'octets correspondante limitée à 64 Koctets (2¹⁶ octets) et l'adresse de l'octet en mémoire principale où commence l'écriture de la chaîne d'octets définie par le descripteur.

Faisant suite à ce message d'initialisation issu des modules IOM, vient une série de messages sur le bus PSB ; en premier lieu un message de réponse de l'agent (PLM), soit un message d'accord "Accord Tampon Entrée", soit un message de rejet "Rejet Tampon Entrée", suivi en cas d'accord par un ou plusieurs messages de transfert de données "Entrée Paquet" à partir du module IOM, puis par un message issu de l'agent (PLM) annonçant la fin de l'opération "Fin Entrée Données". Tous ces messages sont commentés ci-après.

Ainsi l'agent (PLM) répond par un message "Accord Tampon Entrée" (champ CDE = 35) donnant au champ AUX la référence du serveur à fonction DMA (PLM ref.) affecté à l'opération demandée par le module IOM. Par la partie "donnée" ce message comporte un troisième mot (mot N^{o}2) dans lequel la référence de l'opération IOM (IOM ref.) est portée sur un octet ainsi que la cadence maximale de travail, portée aussi sur un octet. Cette réponse termine la séquence de négociation et est immédiatement suivie par l'envoi du premier message de façon synchrone par le module IOM du premier message "Paquet de données en Entrée". La partie "en-tête" de ces messages comporte l'identification du module IOM (IOM-ID) dans le champ EXP, l'identification de l'agent (PLM) (PLM-ID) dans le champ DST, un code de commande (3F-Hex modifié en 3E-Hex pour le dernier paquet) au champ CDE et la référence de l'opération (PLM réf.) dans le champ AUX. La partie "données" de ces messages est au maximum de 32 octets. Si la longueur de transfert envisagée n'est pas un multiple exact de 32, le dernier mot est complété par des octets non significatifs.

La fonction "Serveur Mémoire" de PLM est activée automatiquement dés réception du premier message "Paquet de données en Entrée". L'agent (PLM) écrit la chaîne d'octets en mémoire centrale au fur et à mesure qu'il reçoit les paquets de données. L'agent (PLM) effectue ses écritures en mémoire centrale en générant lui-même sur PLI, selon la phase interne des mouvements de données, des messages dits de type IV (étudiés ultérieurement) et qui sont semblables à ceux que les modules IOM envoient directement dans les opérations d'accès immédiat (message de type II).

Une fois terminé l'écriture en mémoire centrale des données reçues, l'agent (PLM) envoie son message "Fin Entrée Données" et libère le serveur à fonction DMA. Ce message, long de trois mots, comporte une partie "en-tête" incorporant au champ DST l'identification du module IOM (IOM-ID), au champ EXP l'identification de l'agent (PLM) (PLM-ID), au champ CDE le code 4C-Hex, enfin au champ AUX la référence de l'opération par l'agent (PLM) (PLM réf.). La partie "données", longue de un mot, comportera d'une part la référence de l'opération par IOM (IOM réf.), d'autre part une indication de l'état de l'opération (00-Hex en cas de succès ou une valeur supérieure en cas d'incident). Dans ce dernier cas, il appartiendra au module IOM de relancer toute l'opération par l'envoi d'un message d'initialisation "Requête Tampon Entrée".

En cas de rejet par l'agent PLM du message "Requête Tampon Entrée" (champ CDE=34-Hex), cet agent émet un message dont la partie "donnée" réduite à un mot comportera la référence IOM de l'opération (IOM réf.). Ce rejet peut provenir d'un manque de ressources de la part de l'agent (PLM) notamment des serveurs à fonction DMA (cas peu fréquent) mais aussi de requête non conforme au niveau du contenu du message "Requête Tampon Entrée". Le module IOM devra donc émettre une nouvelle requête.

Les opérations de sortie de données en phase externe sur le bus PSB sont structurées de façon similaire aux opérations d'entrée de données et ne seront pas présentées en détail dans la suite de la description. Les commandes sont également au nombre de cinq ; il leur correspond le même nombre de messages types sur PSB :
. "Requête Sortie Données" du module IOM vers l'agent (PLM) pour initialiser l'opération. Ce message contient, outre une référence opération (IOM réf.), les descripteurs mémoires (maximum 4) associés aux transferts de données (adresses mémoire centrale et longueurs correspondantes des champs d'octets à transférer).
. "Requête Tampon Sortie" de l'agent (PLM) vers le module IOM. Ce message contient entre autres les références (PLM réf.) des ressources de PLM (serveur à fonction DMA) affectés à l'opération.
. "Accord Tampon Sortie" ou "Rejet Tampon sortie" du module IOM vers l'agent (PLM). En cas d'accord le message précise la cadence maximum de transfert.
. "Paquet de données en Sortie" de l'agent (PLM) vers le module IOM. Dès réception du message "Accord Tampon sortie" au serveur mémoire de l'agent (PLM), ce dernier envoit immédiatement les données lues en mémoire centrale à l'IOM par une série de messages synchrones "Paquet de données en sortie". Le transfert des données de la mémoire centrale vers l'agent (PLM) se fait selon la phase interne de l'opération de mouvement de données par des messages dits de type IV et qui sont semblables à ceux que les modules IOM envoient directement dans les opérations d'accès immédiat (message de type II).

En ce qui concerne les formats de divers messages des opérations de sortie de données, ceux-ci dérivent directement des formats des messages fonctionnellement équivalents existant dans les opérations d'entrée de données.

### IV. Liaisons PLM/MMU

Les liaisons PLM/MMU entre agents de liaison (PLM) et la mémoire centrale (MMU) correspondent à la phase interne des opérations de mouvements de données. A ces liaisons ne correspondent que des messages sur les bus UMI et la liaison PLI.

La structure des messages est identique à celle des messages décrits dans la présentation des messages relatifs aux liaisons de type II (accès immédiat) en remplaçant toutefois le rôle du module IOM par celui de l'agent de liaison (PLM) qui sera identifié par son code (PLM-ID).

Les messages types utilisés dans ces liaisons et dont les noms sont rappelés ci-après ne seront pas décrits en détail (le lecteur aura la possibilité de se reporter à la description des messages d'accès immédiat). Ce sont au départ de l'agent de liaison (PLM), les messages ("Test Bloc", "Lire Bloc" et "Ecrire Bloc", et en réponse de la mémoire centrale "Erreur Ecriture Mémoire" et "Retour Bloc Mémoire, Etat 0/1/2".

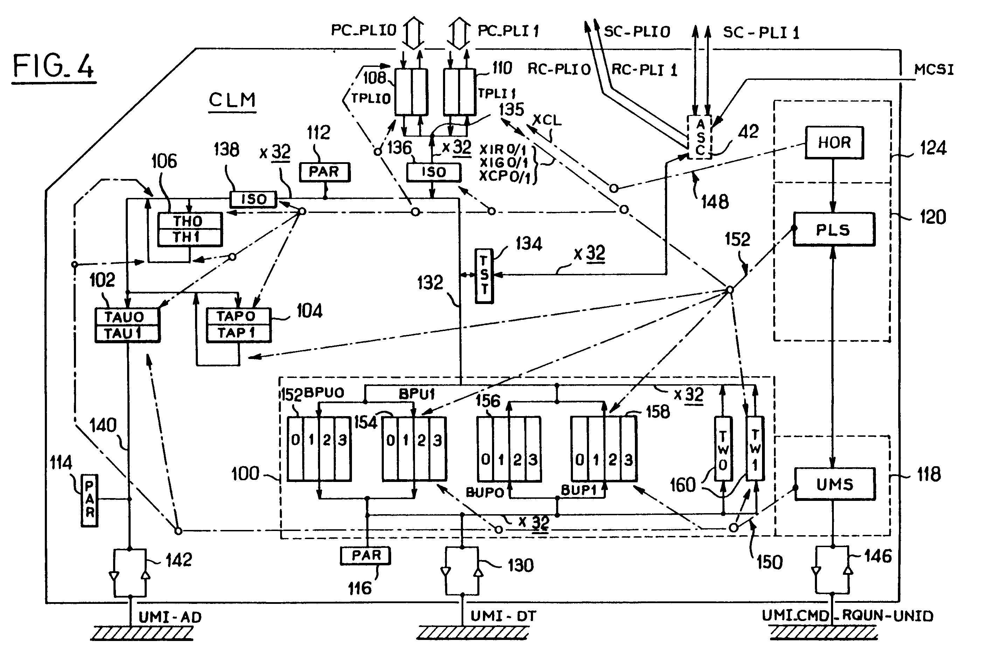

Après la présentation des divers messages véhiculés entre les voies parallèles des bus interne et externe du système informatique selon l'invention, les agents de liaison (CLM) et (PLM) vont maintenant être décrits en se référant respectivement aux Figures 4, 5 et 6.

Si l'on considère la Figure 4, l'agent de liaison (CLM) comporte un ensemble de mémoires de travail composé d'un jeu de mémoires tampon 100 destinées à recevoir des données, une paire de mémoires tampon auxiliaires 102, 104 (TAU 0 et TAU 1, TAP 0 et TAP 1) destinées à recevoir des adresses, et une autre mémoire tampon auxiliaire 106 (TH 0 et TH 1) destinée à recevoir la partie "en-tête" des messages véhiculés sur la liaison PLI.

L'agent (CLM) comporte également un jeu de portes bidirectionnelles à mémorisation 108,110 par liaison PLI. Les jeux de portes à mémorisation 108 et 110 sont montés en étoile (dans le cas présent en parallèle compte-tenu du nombre limité à deux des liaisons PLI) sur un noeud 135 pour être connectés respectivement aux voies parallèles PC-PLI 0 et PC-PLI 1 des liaisons PLI.

Bien que non représentés, les circuits correspondants à ces diverses mémoires 100,102,104, aux portes à mémorisation 108,110 sont au nombre de 32 (x32 sur la Figure 4) pour permettre des transferts d'information de largeur égale à 4 octets soit 1 mot. A ces lignes et circuits de transfert proprement dits s'ajoutent quatre lignes de parité (une ligne par octet) associées avec des contrôleurs de parité PAR 112,114,116. L'agent de liaison (CLM) comporte deux séquenceurs, le séquenceur (UMS) 118, le séquenceur (PLS) 120, tous les deux synchronisés par une horloge (HOR) 124. L'agent (CLM) incorpore également un sous-ensemble de liaison de service (ASC) 42 organisé autour d'un microprocesseur type 8086 connecté aux voies série SC-PLI 0 et SC-PLI 1 des deux liaisons inter-agent au travers de circuits d'interface USART 8251 (non représentés). Le sous-ensemble (ASC) 42 gère en particulier l'initialisation du système, les procédures de tests et d'erreurs.

Le jeu de mémoires tampon 100 est bidirectionnel et se compose en entrée de deux circuits mémoire BPU 0 (152) et BPU 1 (154) d'une capacité de 4 mots chacun et en sortie de deux circuits mémoire BUP 0 (156) et BUP 1 (158) d'une capacité de 4 mots également et de deux circuits mémoire TW0 et TW1 d'une capacité de 1 mot, ces derniers étant spécialement réservés au transfert d'informations dans la procédure de "boîte aux lettres" associée aux interruptions des modules IOM par les unités centrales. Ces circuits mémoire sont montés en parallèle et sont connectés d'une part à la voie "données" UMI-DT du bus UMI au travers d'un jeu de portes 130, d'autre part côté PLI à un bus de travail 132. Ce bus 132 est connecté au sous-ensemble (ASC) 42 au travers d'un jeu de portes TST 134, au jeu de portes à mémorisation 108 et 110 par un jeu de portes d'isolement ISO 136 relié au noeud 135 et aux entrées du jeu de tampons auxiliaires des jeux 102, 104 et 106 par un autre jeu de portes d'isolement ISO 138. Les tampons auxiliaires des jeux 102, 104 et 106 ont tous pour capacité 1 mot. Chaque jeu comporte autant de tampons (ici deux) que de liaisons PLI dans le système informatique. Le premier jeu de tampons d'adresses (TAU 0 et TAU 1) 102 a sa sortie connectée par un bus 140 à la voie d'adresses UMI-AD du bus UMI au travers d'un jeu de portes 142. L'autre jeu de tampons d'adresse (TAP 0 et TAP 1) 104 a sa sortie bouclée sur le bus 132 par l'intermédiaire de la porte 150 138, de même que la sortie du jeu de tampon "en-tête" (TH 0 et TH 1) 106. Cette dernière configuration est utilisée pour la génération des messages réponses vers les modules IOM et les agents (PLM) dans les liaisons de types II et IV étudiées précédemment. D'une façon similaire les mémoires des portes des jeux 108 et 110 ont pour capacité 1 mot.

L'horloge (HOR) 124 délivre deux signaux d'horloge synchrone, l'un pour le bus UMI, l'autre référencé XCL (voir ligne fléchée 148) pour les voies parallèles des liaisons PLI. Les séquenceurs (UMS) 118 et (PLS) 120 travaillent également de façon synchrone avec le signal XCL et à la même fréquence.

Le séquenceur UMS (118) est connecté à la voie de commande UMI-CMD du bus UMI au travers d'un jeu de portes 146. Outre la gestion des priorités sur UMI, le séquenceur (UMS) 118 contrôle les portes d'accès côté UMI des mémoires 100 et 102 (voir réseau fléché 150). De plus le séquenceur (UMS) 118 est susceptible de recevoir des instructions à partir des messages (ou en-têtes de messages) contenus dans les tampons auxiliaires 106 (TH 0 et TH 1).

Le séquenceur (PLS) 120 contrôle les portes d'accès côté PLI des mémoires 100 et 102, les portes d'accès des mémoires 104 et 106, des portes à mémorisation 108 et 110 des portes ISO 136 et 138 et la génération et/ou la réception de signaux de commande illustrés Figure 4 sous la référence XIR 0/1, XIG 0/1, XCP 0/1 utilisés dans les voies parallèles des liaisons PLI sur trois lignes additionnelles (non représentées) aux 36 lignes de transmissions de données (voir réseau fléché 152). Ces trois lignes dont les fonctions seront expliquées ultérieurement se composent d'une ligne bidirectionnelle XCP, d'une ligne unidirectionnelle en émission XIG et d'une ligne unidirectionnelle en réception XIR, ces lignes sont connectées au séquenceur (PLS) 120 respectivement par un jeu de portes bidirectionnelles à mémorisation, une porte unidirectionnelle à mémorisation et un circuit à mémorisation (non représentés) tous synchronisés à partir du signal XCL issu de l'horloge 124.

Les deux séquenceurs (UMS) 118 et (PLS) 120 sont réalisés de façon entièrement cablée sous la forme de réseaux logiques programmés. Ces réseaux logiques, dont le principe et l'utilisation sont bien connus dans la technique ne seront pas décrits ici en détail. Bien évidemment ces circuits correspondent à autant d'organigrammes que de situations des divers messages intéressant l'agent (CLM) 120 et présentés auparavant.

Si l'on considère maintenant, à titre d'exemple, le cas d'une lecture en mémoire centrale (MMU) en mode accès immédiat, le message de commande de lecture issu d'un module IOM entre dans l'agent (CLM) par l'intermédiaire de la liaison PLI (par exemple PLI 0). Ce message se compose d'une en-tête dirigée vers le tampon 106 (TH 0) et d'une adresse dirigée vers les tampons 102 (TAU 0) et 104 (TAP 0). Ces opérations sont contrôlées par le contrôleur PLS 120. Le contrôleur UMS 118 prend ensuite le relais, lit l'en-tête contenue dans TH 0 et le décode pour générer les instructions CMD, RQUN et UNID destinées au bus UMI. Parallèlement le contenu du tampon TAU 0 est transféré sur la voie UMI-AD. Ainsi sollicitée, la mémoire centrale (MMU) répond et charge sous contrôle du séquenceur (UMS) 118 les tampons 156 (BUP 0). Parallèlement le contenu du tampon 106 (TH 0) est modifié selon le résultat de l'opération de lecture (Retour Bloc Mémoire, Etat 0/1/2).

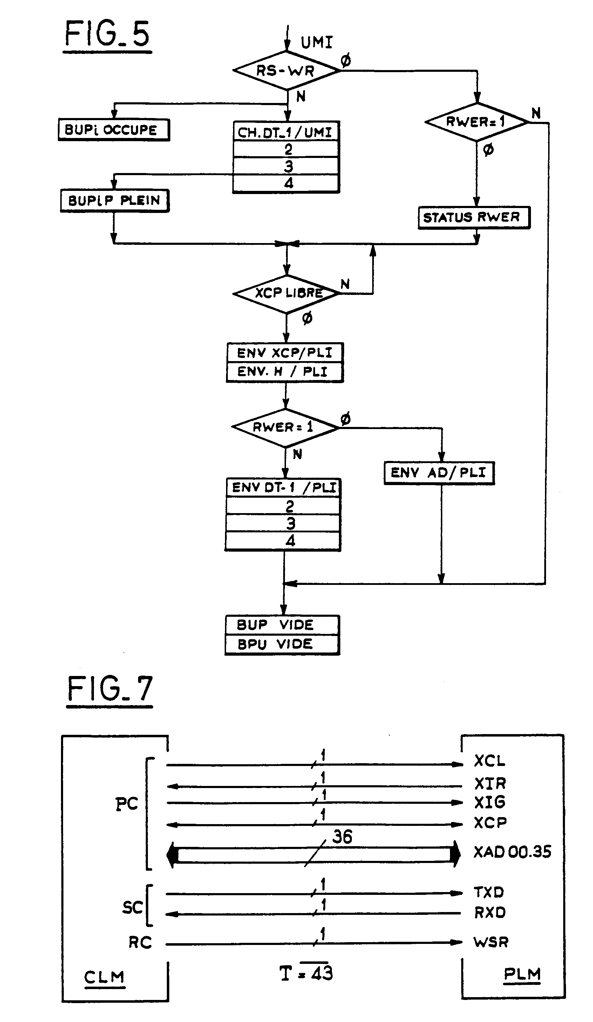

Le séquenceur PLS (120) reprend le contrôle de l'opération et envoie sur PLI 0 à partir du tampon 106 (TH 0) l'en-tête du message retour vers le module IOM demandeur suivi du contenu des tampons 156 (BUP 0) c'est à dire des données lues en mémoire. La phase retour de l'opération qui vient d'étre décrite est pour partie illustrée dans l'organigramme de la Figure 5 commenté ci-après.

Toujours à titre d'exemple, l'organigramme de la Figure 5 illustre de façon partielle, le fonctionnement des réseaux logiques programmés dans les séquenceurs (UMS) et (PLS) de l'agent de liaison interne (CLM) et qui correspond à un retour de mémoire centrale (MMU) après une opération d'accès immédiat (lecture ou écriture) demandée par un module IOM associé à une liaison PLI donnée. Dès la réception d'un retour de mémoire centrale sur le bus UMI, le test "RS-WR" (Retour Ecriture) est effectué. Si "RS-WR" est vrai, le test "RWER=1" (Erreur Ecriture) sera alors effectué. Si "RWER=1" est faux, sa sortie se branchera directement sur la fin de la séquence par la génération de signaux d'état "VIDE" pour les divers tampons BUP et BPU . (En effet en cas de succès de l'opération d'écriture, il n'est pas renvoyé de message vers le module IOM d'origine). Si "RWER=1" est vrai, le branchement se fera sur la prise en compte du type de défaillance "STATUS RWER" ; cette information servira à remplir le champ AUX de l'en-tête du message "Erreur Ecriture Mémoire". Le test suivant "XCP LIBRE" correspond à l'état d'occupation de la voie parallèle de la liaison PLI concernée. Dans la négative le message restera en attente, dans l'affirmative le séquenceur (PLS) de l'agent (CLM) génèrera un signal XCP d'occupation de la liaison PLI "ENV XCP/PLI" puis procédera à l'envoi de l'en-tête du message à partir du tampon auxiliaire 106 "ENV H/PLI" suivi d'un second test "RWER=1" (sortie=vrai) et de la réexpédition sur PLI à partir du tampon auxiliaire 104 (TAP) l'adresse mémoire indiquée dans la commande d'écriture venue de l'agent IOM "ENV AD/PLI". Si le test "RS-WR" est faux, la situation correspond à un retour de lecture mémoire avec la génération de messages du type "Retour Bloc Mémoire" et le chargement à partir de UMI-DT de quatre mots de données, "CH DT-1/UMI, etc..", après avoir généré un signal d'occupation d'une des mémoires tampons BUP. Lors du chargement du 4ème et dernier mot dans cette mémoire tampon est généré, un signal d'état "BUPi PLEIN". Un branchement est alors effectué sur le test d'occupation de la liaison PLI "XCP LIBRE" et pour permettre la prise de la ligne et l'envoi à partir du tampon 106 (TH) de l'en-tête du message de réponse. Le second test "RWER=1" branchera par son résultat négatif l'opération de vidage de la mémoire BUP vers la liaison PLI, "ENV DT-1/PLI, etc..". La séquence se terminera par la génération des signaux d'état "VIDE" pour les tampons BUP et BPU.

Si l'on considère maintenant la Figure 6, l'agent de liaison externe (PLM) décrit comporte deux chaines de communication 200 et 202 montées en parallèle entre le bus PSB et la voie parallèle de liaison inter-agent PLI. La chaine de communication 200 est affectée aux transferts directs entre PSB et PLI tandis que la chaîne de communication 202 est affectée aux transferts indirects et plus particulièrement à la réalisation de la fonction "Serveur Mémoire" de l'agent (PLM).

La chaîne de communication directe 200 se compose d'un circuit contrôleur de message (MPC 0) 204 dont l'adresse message est 00-Hex. Ce type de circuit identificateur dont la définition est donnée dans la Norme IEEE 1296 est bien connu dans l'industrie et ne sera pas repris en détail. L'entrée du circuit identificateur (MPC 0) est connectée par un jeu de portes bidirectionnelles 206 au bus PSB, tandis que sa sortie est reliée à un bus de travail 208 sur lequel sont connectés une unité de traitement auxiliaire composée d'un microprocesseur 210 (32 bits - 16 MHz) du type 68020 et d'une mémoire morte 212 du type PROM de 2 Koctets chargée des instructions destinées au microprocesseur 210, d'une première mémoire de travail 214 de type SRAM de grande capacité (32 Koctets) pour permettre le stockage temporaire des informations, une unité de codage-décodage CDC 216 et une seconde mémoire de travail composée d'une paire de registres FIFO 218,220 d'une capacité de cent mots de 32 bits. Au registre FIFO d'entrée 218 est associé un compteur de contrôle 8 bits 222 tandis qu'au registre FIFO de sortie 220 est associé un autre compteur de contrôle 8 bits 224. Côté PLI les deux registres FIFO 218,220 sont connectés à la voie parallèle PC-PLI au travers d'un circuit d'interface bidirectionnel à portes de mémorisation 226. Les registres FIFO 218,220 et les portes à mémorisation du circuit 226 sont gérés et contrôlés par un séquenceur (PLS) 228 de l'agent de liaison (PLM) lui-même contrôlé par le séquenceur (PLS) 120 de l'agent de liaison (CLM) et synchronisé par le signal d'horloge XCL.

La chaine de communication indirecte 202 se compose d'un circuit contrôleur de message (MPC 1) 230 dont l'adresse message est le code d'identification de l'agent (PLM) considéré, c'est à dire PLM-ID. L'entrée du circuit (MPC 1) est connectée par un jeu de portes bidirectionnelles 232 sur le bus PSB tandis que sa sortie est reliée à un bus de travail 234 sur lequel sont connectés une unité de traitement auxiliaire composée d'un microprocesseur 236 (32 bits - 16 MHz) de type 68020 et d'une mémoire morte de type EPROM 238 de 128 Koctets chargée des instructions destinées au microprocesseur 236, d'une première mémoire de travail 240 de type SRAM et de grande capacité (128 Koctets) pour permettre le stockage des informations en mode opératoire "Serveur Mémoire", un dispositif d'accés direct en mémoire CAD 242, une unité de codage-décodage CDC 244, un circuit processeur multifonction (MFP) 246 du type 68901, et une seconde mémoire de travail constituée d'une paire de registres FIFO 248, 250 d'une capacité de cent mots de 36 bits (mots de 4 octets avec leur parité). Au registre FIFO d'entrée 248 est associé un compteur de contrôle de 8 bits 252 tandis qu'au registre FIFO de sortie 250 est associé un autre compteur de contrôle 8 bits 254. Les registres FIFO 248 et 250 sont montés en parallèle avec les registres FIFO 228 et 220 de la chaine directe 200 pour être reliés à la voie parallèle PC-PLI au travers du circuit d'interface à portes de mémorisation 226. Ils sont également contrôlés par le séquenceur (PLS) 228 de l'agent (PLM). Bien que non représentées, les trois lignes XCP, XIR, XIG de la voie PC-PLI sont connectées, au travers du circuit d'interface 226, au séquenceur (PLS) 228 de l'agent (PLM). Pour ce qui concerne ces trois lignes, le circuit 226 présente une structure de portes à mémorisation et de mémoire semblable à celle déjà décrite de l'interface associée à l'autre extrémité des lignes, côté CLM.

Le processeur multifonction (MFP) 246 qui assure en outre les fonctions classiques d'interruption de chronomètre, s'incorpore au contrôleur de service (ASC) 44-46 convenablement relié à la voie série SC-PLI de la liaison PLI et assisté par le microprocesseur 236.

Le contrôleur de service (ASC) 44-46 est chargé de la fonction d'interface PSB connue sous le nom de CSM et dont la définition est donnée dans la Norme IEEE 1296. Cette fonction CSM implique la connexion au bus PSB par une porte unidirectionnelle 258. Elle est utilisée dans le cadre du standard IEEE 1296 lors de l'initialisation du bus PSB. Le contrôleur de service (ASC) 44-46 est aussi utilisé pour les procédures et protocoles de test et d'erreurs propres de PSB dans le cadre du standard IEEE 1296. Il est connecté de ce fait aux deux circuits contrôleurs de message (MPC O) 204 et (MPC 1) 230. Une ligne RC-PLI venant de la liaison PLI permet le redémarrage à chaud (WRS) du contrôleur de service (ASC) 44-46 et des microprocesseurs 210 et 236.

Ainsi donc le transfert des messages et l'adaptation des divers protocoles au sein de l'agent PLM sont réalisés sous la gouverne de microprocesseurs programmés. La chaine de communication 200 directe assure le transfert et la gestion des messages concernés par les liaisons de types I et II tandis que la chaine de communication indirecte 202 assure le transfert et la gestion des messages de types III et IV. En ce qui concerne les messages incidents d'origine PSB, la discrimination est effectuée par l'identification des adresses messages par les circuits (MPC) 204 et 230 00-Hex pour (MPC 0) et PLM-ID pour (MPC 1). Au retour les messages de type IV destinés à la chaine de communication 202 sont sélectionnés par leur adresse message PLM-ID au niveau du chargement du registre FIFO 248. Cette fonction d'identification est utilisée avec succès et efficacité pour le transfert d'informations entre des modules IOM (module émetteur IOM-E, module récepteur IOM-R) associés à deux bus PSB distincts (PSB-E et PSB-R). Dans cette situation la partie "en-tête" du message comportera l'identification de l'agent PLM-R. Le message transitera par l'agent PLM-E puis par la liaison PLI-E pour charger la porte de mémorisation d'E/S TPLI-E de l'agent (CLM). A ce stade, le message est bloqué au niveau du noeud 135 par les portes d'isolement 136 et sera chargé dans la porte à mémorisation TPLI-R associée à l'agent PLM-R qui se reconnaitra et le prendra en charge. Grâce à cette particularité on obtient ainsi une véritable extension de la capacité des bus extérieurs de communication.

En ce qui concerne la chaine de communication indirecte 202, il est à noter que les transferts d'informations entre le circuit (MPC 1) 230 et la mémoire à grande capacité SRAM 240 sont gérés par le circuit CAD 242, tandis que les transferts entre la mémoire 240 sont gérés directement par le microprocesseur 236. Le circuit CAD 242 (à ne pas confondre avec les 32 serveurs à fonction accès direct DMA obtenus par logiciel lors de l'implémentation de la fonction "Serveur Mémoire" de l'agent PLM) comporte un jeu de compteurs d'entrée (CAE) 260 et (CLE) 262 sur 16 bits et un jeu de compteurs de sortie (CAS) 264 et (CLS) 266 sur 16 bits ce qui ne permet, dans le mode de réalisation ici décrit, qu'une seule opération d'entrée et une seule opération de sortie simultanées entre le module IOM et l'agent (PLM) dans les liaisons de type III. Les compteurs (CAE) 260 et (CAS) 264 sont affectés à l'adressage en mémoire SRAM 240 tandis que les compteurs (CLE) 262 et (CLS) 266 sont affectés à la détermination de longueur des blocs d'information à transférer.

La Figure 7 illustre de façon schématique une liaison inter-agent PLI (si l'on considère la figure 7, les références des voies PC, SC et RC sont indiquées à gauche tandis que les références des signaux correspondants sont indiqués à droite). Physiquement elle se compose de 43 lignes actives sous la forme d'une liaison souple qui peut atteindre quelques mètres. Elle se compose d'une part de deux voies de communication, une voie parallèle PC-PLI (40 lignes) et une voie série SC-PLI (2 lignes), d'autre part une ligne unidirectionnelle RC-PLI de l'agent (CLM) vers l'agent (PLM) pour véhiculer, à partir du contrôleur de service (ASC) 42 de l'agent (CLM) ou du processeur de service (SPA) 22 du système hôte raccordé à sa sortie MCSI un signal WSR vers le contrôleur de service (ASC) 44-46 de l'agent (PLM) lors des redémarrages à chaud du système.

La voie de communication série SC assure la liaison entre le processeur de service du système (SPA) 22 et le contrôleur (ASC) 44-46 et les microprocesseurs 210 et 236 de l'agent (PLM) via le contrôleur (ASC) 42 de l'agent (CLM) et la liaison de service MCSI (voir Figures 1 et 3). Elle se compose de deux lignes : une ligne émission référencée TXD de l'agent (CLM) (maître) vers l'agent (PLM) (esclave) et une ligne réception RXD de l'agent (PLM) vers l'agent (CLM). Ces deux lignes travaillent en mode asynchrone avec des caractères de 8 bits plus parité, en chaîne de 11 évènements (un par "temps" T d'horloge) après ajout des encadrements "START" et "STOP", avec un débit d'environ 15.000 bauds. Côté PLM ces deux lignes sont gérées par le circuit USART 8251 correspondant mentionné auparavant.

La voie de communication parallèle des liaisons PLI se compose de 40 lignes comprenant :
. le signal d'horloge de transmission XCL émis par l'agent (CLM),
. les signaux d'accord à l'agent (PLM) de la voie de communication XIR et XIG,
. le chemin bidirectionnel "Adresses/Données" constitué de 36 signaux offrant un passage de largeur 4 octets avec leur parité, XAD00-35 et d'un signal signal d'occupation du chemin, XCP.

Les lignes de la voie parallèle PC de la liaison PLI sont connectées aux divers circuits de mémorisation et portes (en particulier les éléments 108-110 et 226) déjà décrits et localisés à chaque extrêmité de la voie parallèle dans les agents CLM et PLM correspondants.

La fréquence de transmission peut atteindre 25 MHz en limitant la longueur physique de PLI à 0,5 mètre. Avec une longueur physique de 2,5 mètres, la fréquence maximum admissible tombe à 16 MHz. L'intervalle entre messages est au moins un "temps" T d'horloge.

L'accord à l'agent (PLM) de la voie de communication repose sur le séquenceur (PLS) 120 de l'agent (CLM), ce dernier disposant normalement de la voie. Quand l'agent (PLM) veut émettre, il active son signal de demande XIR. Si l'agent (CLM) n'a pas besoin de la voie (les mémoires de sortie des portes 108 ou 110 étant vidées et les mémoires d'entrée de ces mêmes portes étant prêtes à recevoir), l'agent (CLM) active son signal d'accord XIG par son séquenceur (PLS) 120. L'apparition de XIG dans l'agent (PLM) commande la désactivation immédiate de son XIR sauf si l'agent (PLM) désire conserver la voie pour enchainer le cycle présent avec un autre cycle de transmission. La disparition de XIR dans l'agent (CLM) commande la désactivation immédiate de son XIG. Si le signal XIG reste présent dans l'agent (PLM) après l'envoi de son message, ce dernier peut continuer à émettre en enchainant immédiatement le cycle de transmission suivant.

Sur le chemin XAD00-35, les messages sont transmis par giclées de 4 octets en parallèle à chaque temps d'horloge XCL du cycle de transmission. La partie "en-tête" H du message est transmise au temps "0" du cycle et la suite quand elle existe est transmise au(x) temps suivant(s). L'apparition du signal /XCP/ indique le début de transmission d'un message sur la voie parallèle de PLI et sa disparition la fin de transmission. Ce signal /XCP/ indique l'état d'occupation des lignes XAD.

Tous les signaux /XIR/, /XIG/, /XCP/ et /XADi/ sont horlogés à l'émission et la réception par l'agent de liaison (CLM) ou (PLM) concerné à partir du signal d'horloge de synchronisation XCL émis par CLM.

Le système informatique qui vient d'être décrit à titre d'exemple peut, sans sortir du cadre de l'invention , donner lieu à un certain nombre de variantes soit au niveau de la construction des agents contrôleurs, soit au niveau des protocoles utilisés dans les différents bus. Sur ce dernier point, la structure modulaire de l'interconnexion centrale selon l'invention, permet soit une simple reconfiguration du système soit une adaptation partielle appropriée à chaque type de bus (interne ou externe) sans redessiner complètement l'interconnexion pour chaque application particulière.

## Revendications

1. Système informatique comportant au moins une unité centrale (CPU) (18) et une mémoire centrale (MMU) (20) communiquant par l'intermédiaire d'un bus interne de communication (16), une pluralité de bus externes de communication (24, 26) de types différents de celui du bus interne (16) et reliés chacun à au moins un module de contrôle (30, 31), ci-après appelé module IOM, et associé à au moins un organe périphérique (28, 29), ledit bus interne (16) étant relié à un agent de liaison interne (CLM) (32), lesdits bus externes étant reliés chacun à un agent de liaison externe (PLM) (34, 36), chacun desdits agents de liaison externes (PLM) (34, 36) étant reliés audit agent de liaison interne (CLM) (32) par une liaison inter-agent (38, 40), ci-après appelée liaison PLI, ladite liaison PLI possédant son propre protocole de communication et lesdits agents de liaison (CLM) (PLM) assurant l'adaptation entre les protocoles utilisés respectivement dans les bus (16, 24, 26) et la liaison PLI (38, 40), ledit système étant caractérisé en ce que lesdits agents de liaison externes (PLM) (34, 36) sont reliés par un réseau étoilé de liaisons PLI (38, 40) audit agent de liaison interne (CLM) qui est muni de moyens de connexion (108, 110, 135, 136) pour assurer la retransmission des messages émis par l'un quelconque des modules IOM (30, 31) et destinés à un autre module IOM (30, 31) associé à un bus externe différent.

2. Système informatique selon la revendication 1 caractérisé en ce que lesdits protocoles utilisés respectivement dans les bus (16, 24, 26) et la liaison PLI (38, 40) sont différents.

3. Système informatique selon la revendication 2 caractérisé en ce que la liaison PLI (38, 40) est de type présentant une voie de communication parallèle travaillant en mode message de type paquet (transmission de message avec en-tête).

4. Système informatique selon la revendication 3 caractérisé en ce que la voie de communication parallèle de la liaison PLI est bidirectionnelle et comporte une ligne de synchronisation XCL entre les agents de liaison interne (CLM) (32) et externes (PLM) (34, 36).

5. Système informatique selon la revendication 4 caractérisé en ce que le signal de synchronisation XCL dans la liaison PLI est généré par une horloge (HOR) (124) émettant à partir de l'agent de liaison interne (CLM) (32) et commandant deux séquenceurs (PLS) (120, 228) disposés dans chacun des agents de liaison (CLM) (PLM) (32, 34, 36).

6. Système informatique selon la revendication 5 caractérisé en ce que chaque séquenceur (PLS) (120, 228) contrôle le passage de signaux au travers d'un jeu de portes à mémorisation (108, 110) disposées dans l'agent de liaison correspondant (32, 34, 36) et reliées d'une part à la voie de communication parallèle PC-PLI de la liaison PLI, d'autre part à un ensemble de mémoires de travail (100, 102, 104, 106, 214, 218, 220, 240, 248, 250) disposé dans l'agent de liaison correspondant (32, 34, 36).

7. Système informatique selon la revendication 6 dans lequel le bus interne comporte une voie de commande UMI-CMD, une voie d'adresse UMI-AD et une voie de données UMI-DT caractérisé en ce que ledit agent de liaison (CLM) (32) comporte un second séquenceur (UMS) (118) également contrôlé par ladite horloge (HOR) (124) et relié à la voie de commande UMI-CMD du bus interne, lesdits séquenceurs (UMS) (118) et (PLS) (120) contrôlant le chargement et le vidage dudit ensemble de mémoires de travail (100, 102, 104, 106) relié aux voies d'adresses UMI-AD et de données UMI-DT.

8. Système informatique selon l'une des revendications 2 à 7 caractérisé en ce que l'agent de liaison externe (PLM) (34, 36) comporte en outre un dispositif de communication indirecte (202) entre les modules IOM (30, 31) et les unités mémoire (MMUs) (20) pour assurer une fonction "Serveur Mémoire" lors de flots de données en réponse à des messages de négociation issus du module IOM (30, 31).

9. Système informatique selon la revendication 8 caractérisé en ce que ledit dispositif de communication indirecte (202) comporte des moyens pour identifier (230) les messages de négociation et coopérant avec une unité de traitement (236, 238) couplée à un dispositif d'accès direct en mémoire (242) et une mémoire de grande capacité (240).

10. Système informatique selon l'une des revendications précédentes caractérisé en ce que chaque liaison PLI comporte une voie série SC.PLI indépendante et commandée par deux contrôleurs de service (ASC) (42, 44, 46) disposés dans chacun des agents de liaison (CLM) (PLM) (32, 34, 36) et destinés à transmettre les ordres d'initialisation et/ou de service maintenance.

## Claims

1. A computer system comprising at least one central unit (CPU) (18) and one central memory (MMU) (20) communicating via an internal communication bus (16), a plurality of external communication buses (24, 26) of types different from that of the internal bus (16) and each connected to at least one control module (30, 31), hereinafter called an IOM module, and associated with at least one peripheral element (28, 29), said internal bus (16) being connected to an internal linking agent (CLM) (32), said external buses each being connected to an external linking agent (PLM) (34, 36), each of said external linking agents (PLM) (34, 36) being connected to said internal linking agent (CLM) (32) by an inter-agent link (38, 40), hereinafter called PLI link, said PLI link having its own communication protocol and said linking agents (CLM) (PLM) ensuring matching between the protocols used respectively in the buses (16, 24, 26) and the PLI link (38, 40), said system being characterised in that said external linking agents (PLM) (34, 36) are connected by a star network of PLI links (38, 40) to said internal linking agent (CLM) which is provided with connection means (108, 110, 135, 136) to ensure the retransmission of messages transmitted by any one of the IOM modules (30, 31) and intended for another IOM module (30, 31) associated with a different external bus.

2. A computer system according to Claim 1, characterised in that said protocols used respectively in the buses (16, 24, 26) and the PLI link (38, 40) are different.

3. A computer system according to Claim 2, characterised in that the PLI link (38, 40) is of the type having a parallel communication channel working in packet-type message mode (transmission of message with header).

4. A computer system according to Claim 3, characterised in that the parallel communication channel of the PLI link is bidirectional and comprises an XCL synchronising line between the internal (CLM) (32) and external (PLM) (34, 36) linking agents.

5. A computer system according to Claim 4, characterised in that the XCL synchronising signal in the PLI link is generated by a clock (HOR) (124) transmitting from the internal linking agent (CLM) (32) and controlling two sequencers (PLS) (120, 228) arranged in each of the linking agents (CLM) (PLM) (32, 34, 36).

6. A computer system according to Claim 5 characterised in that each sequencer (PLS) (120, 228) controls the passage of signals through a set of storage gates (108, 110) arranged in the corresponding linking agent (32, 34, 36) and connected on the one hand to the PC-PLI parallel communication channel of the PLI link, and on the other hand to a set of working memories (100, 102, 104, 106, 214, 218, 220, 240, 248, 250) arranged in the corresponding linking agent (32, 34, 36).

7. A computer system according to Claim 6 in which the internal bus comprises a UMI-CMD control channel, a UMI-AD address channel and a UMI-DT data channel, characterised in that said linking agent (CLM) (32) comprises a second sequencer (UMS) (118) also controlled by said clock (HOR) (124) and connected to the UMI-CMD control channel of the internal bus, said sequencers (UMS) (118) and (PLS) (120) controlling the loading and dumping of said set of working memories (100, 102, 104, 106) connected to the UMI-AD address channel and the UMI-DT data channel.

8. A computer system according to one of Claims 2 to 7, characterised in that the external linking agent (PLM) (34, 36) further comprises an indirect communication device (202) between the IOM modules (30, 31) and the memory units (MMUs) (20) in order to provide a "Memory Server" function when there are data streams in response to negotiation messages coming from the IOM module (30, 31).

9. A computer system according to Claim 8 characterised in that said indirect communication device (202) comprises means (230) for identifying the negotiation messages and co-operating with a processing unit (236, 238) coupled with a direct memory access device (242) and a high-capacity memory (240).

10. A computer system according to one of the preceding claims, characterised in that each PLI link comprises an independent SC.PLI series channel, controlled by two service controllers (ASC) (42, 44, 46) arranged in each of the linking agents (CLM) (PLM) (32, 34, 36) and intended to transmit initialisation and/or maintenance service orders.

## Patentansprüche

1. Informationssystem, mit wenigstens einer Zentraleinheit (CPU) (18) und einem Zentralspeicher (MMU) (20), die über einen internen Kommunikationsbus (16) miteinander kommunizieren, mehreren externen Kommunikationsbussen (24, 26), die jeweils von einem Typ sind, der vom Typ des internen Busses (16) verschieden ist, und jeweils mit wenigstens einem Steuermodul (30, 31), der im folgenden IOM-Modul genannt wird, verbunden sind, der seinerseits mit wenigstens einem Peripheriegerät (28, 29) verbunden ist, wobei der interne Bus (16) mit einem internen Verbindungswirkelement (CLM) (32) verbunden ist, die externen Busse jeweils mit einem externen Verbindungswirkelement (PLM) (34, 36) verbunden sind und jedes der externen Verbindungswirkelemente (PLM) (34, 36) mit dem interen Verbindungswirkelement (CLM) (32) über eine Wirkelement-Zwischenverbindung (38, 40), die im folgenden PLI-Verbindung genannt wird, verbunden ist, wobei die PLI-Verbindung ihr eigenes Kommunikationsprotokoll besitzt und die Verbindungswirkelemente (CLM) (PLM) die Anpassung zwischen den Protokollen gewährleisten, die in den Bussen (16, 24, 26) bzw. in der PLI-Verbindung (38, 40) verwendet werden, wobei das System dadurch gekennzeichnet ist, daß die externen Verbindungswirkelemente (PLM) (34, 36) über ein sternförmiges Verbindungsnetz (38, 40) mit dem internen Verbindungswirkelement (CLM) verbunden sind, welches seinerseits mit Anschlußmitteln (108, 110, 135, 136) versehen ist, um die Rückübertragung der von einem beliebigen IOM-Modul (30, 31) ausgesandten und für einen weiteren mit einem anderen externen Bus verbundenen IOM-Modul (30, 31) bestimmten Nachrichten zu gewährleisten.

2. Informationssystem gemäß Anspruch 1, dadurch gekennzeichnet, daß die in den Bussen (16, 24, 26) bzw. in der PLI-Verbindung (38, 40) verwendeten Protokolle verschieden sind.

3. Informationssystem gemäß Anspruch 2, dadurch gekennzeichnet, daß die PLI-Verbindung (38, 40) von einem Typ ist, der einen parallelen Kommunikationsweg aufweist, der im Modus für Nachrichten vom Pakettyp (Nachrichtenübertragung mit Kopfteil) arbeitet.

4. Informationssystem gemäß Anspruch 3, dadurch gekennzeichnet, daß der parallele Kommunikationsweg der PLI-Verbindung bidirektional ist und eine Leitung XCL für die Synchronisation zwischen den internen Verbindungswirkelementen (CLM) (32) und den externen Verbindungswirkelementen (PLM) (34, 36) aufweist.

5. Informationssystem gemäß Anspruch 4, dadurch gekennzeichnet, daß das Synchronisationssignal XCL in der PLI-Verbindung durch einen Taktgeber (HOR) (124) erzeugt wird, der ausgehend vom internen Verbindungswirkelement (CLM) (32) sendet und zwei Ablaufsteuereinrichtungen (PLS) (120, 228) steuert, die in jedem der Verbindungswirkelemente (CLM) (PLM) (32, 34, 36) angeordnet sind.

6. Informationssystem gemäß Anspruch 5, dadurch gekennzeichnet, daß jede Ablaufsteuereinrichtung (PLS) (120, 228) den Durchgang der Signale durch eine Gruppe von Speichergattern (108, 110) steuert, die im entsprechenden Verbindungswirkelement (32, 34, 36) angeordnet und einerseits mit dem parallelen Kommunikationsweg PC-PLI der PLI-Verbindung und andererseits mit einer Gesamtheit von Arbeitsspeichern (100, 102, 104, 106, 214, 218, 220, 240, 248, 250), die im entsprechenden Verbindungswirkelement (32, 34, 36) angeordnet sind, verbunden sind.

7. Informationssystem gemäß Anspruch 6, in dem der interne Bus einen Steuerweg UMI-CMD, einen Adressenweg UMI-AD und einen Datenweg UMI-DT aufweist, dadurch gekennzeichnet, daß das genannte Verbindungswirkelement (CLM) (32) eine zweite Ablaufsteuereinrichtung (UMS) (118) enthält, die ebenfalls von dem Taktgeber (HOR) (124) gesteuert wird und mit dem Steuerweg UMI-CMD des internen Busses verbunden ist, wobei die Ablaufsteuereinrichtungen (UMS) (118) und (PLS) (120) das Füllen und Leeren der Gesamtheit von Arbeitsspeichern (100, 102, 104, 106), die mit den Adressenwegen UMI-AD und mit den Datenwegen UMI-DT verbunden ist, steuern.

8. Informationssystem gemäß einem der Ansprüche 2 bis 7, dadurch gekennzeichnet, daß das externe Verbindungswirkelement (PLM) (34, 36) außerdem eine Einrichtung zur indirekten Kommunikation (202) zwischen den IOM-Modulen (30, 31) und den Speichereinheiten (MMUs) (20) aufweist, um eine "Speicher-Server"-Funktion bei Datenströmen aufgrund von vom IOM-Modul (30, 31) ausgegebenen Kommunikationsnachrichten zu gewährleisten.

9. Informationssystem gemäß Anspruch 8, dadurch gekennzeichnet, daß die Einrichtung zur indirekten Kommunikation (202) Mittel zur Identifikation (230) der Kommunikationsnachrichten aufweist und mit einer Verarbeitungseinheit (236, 238) zusammenarbeitet, die mit einer Direktspeicherzugriff-Einrichtung (242) und mit einem Speicher mit großer Kapazität (240) verbunden ist.

10. Informationssystem gemäß einem der vorangehenden Ansprüche, dadurch gekennzeichnet, daß jede PLI-Verbindung einen seriellen Weg SC.PLI aufweist, der unabhängig ist und von zwei Betriebssteuereinrichtungen (ASC) (42, 44, 46) gesteuert wird, die in jedem der Verbindungswirkelemente (CLM) (PLM) (32, 34, 36) angeordnet und dazu bestimmt sind, die Initialisierungs- und/oder Betriebsaufrechterhaltungsbefehle zu übertragen.
